# EUROPEAN PATENT APPLICATION

(11) **EP 4 738 557 A1**
(43) Date of publication of application: **06.05.2026**
(21) Application number: 23945690.8
(22) Date of filing: 04.12.2023
(51) Int. Cl.: H01M 50/179

(54) **BATTERY CELL, BATTERY AND ELECTRIC DEVICE**

(30) Priority: 19.07.2023 CN 202321898082 U
(71) Applicant: Contemporary Amperex Technology Co., Limited, Ningde, Fujian 352100 (CN)
(72) Inventor: WU, Kai, Ningde, Fujian 352100 (CN); LI, Meng, Ningde, Fujian 352100 (CN)
(74) Representative: Kraus & Lederer PartGmbB
(86) International application number: PCT/CN2023/136209
(87) International publication number: WO 2025/015811

(57) **Abstract**

The present application discloses a battery cell, a battery, and an electric apparatus. The battery cell includes a housing, an electrode terminal, and an insulating member. The housing has a first wall, where the first wall has a first through hole. The electrode terminal is disposed in the first through hole, and along a first direction, the electrode terminal has a first end, where the first direction is parallel to a thickness direction of the first wall. At least a portion of the insulating member is disposed between the electrode terminal and a wall of the first through hole, and the insulating member connects the electrode terminal and the first wall. Along the first direction, a projection of the first end does not overlap with a projection of the insulating member. The technical solutions provided by the present application can improve the reliability of the battery.

## Description

### CROSS-REFERENCE TO RELATED APPLICATIONS

The present application claims priority to Chinese Patent Application No. 2023218980827, filed on July 19, 2023, and entitled "BATTERY CELL, BATTERY, AND ELECTRIC APPARATUS," the entire content of which is incorporated herein by reference.

### TECHNICAL FIELD

The present application relates to the field of battery technology, and more particularly, to a battery cell, a battery, and an electric apparatus.

### BACKGROUND

Energy conservation and emission reduction are key to the sustainable development of the automotive industry, and electric vehicles have become an important part of the sustainable development of the automotive industry due to their advantages in energy conservation and environmental protection.

For electric vehicles, battery technology is a critical factor in their development, and improving the reliability of batteries is an urgent technical issue in battery technology that needs to be addressed.

### SUMMARY

The present application provides a battery cell, a battery, and an electric apparatus, where the technical solutions provided by the present application can improve the reliability of the battery.

The present application is implemented through the following technical solutions:

According to a first aspect, some embodiments of the present application provide a battery cell, where the battery cell includes a housing, an electrode terminal, and an insulating member. The housing has a first wall, where the first wall has a first through hole. The electrode terminal is disposed in the first through hole, and along a first direction, the electrode terminal has a first end, where the first direction is parallel to a thickness direction of the first wall. At least a portion of the insulating member is disposed between the electrode terminal and a wall of the first through hole, and the insulating member connects the electrode terminal and the first wall. Along the first direction, a projection of the first end does not overlap with a projection of the insulating member.

In the above solution, the insulating member connects the electrode terminal and the first wall, enabling the electrode terminal to be fixed to the first wall; and the shape of the electrode terminal is defined such that the projection of the first end of the electrode terminal does not overlap with the projection of the insulating member, meaning that the flange currently formed on the first end of the electrode terminal is eliminated, reducing the risk of damage to the insulating member due to interference with the insulating member from the outward bending of the end of the electrode terminal to form a flange. This effectively enhances the insulation performance of the insulating member, reducing the risk of a short circuit in the battery cell, and improving the reliability of the battery.

According to some embodiments of the present application, the insulating member is thermally compositely connected to the electrode terminal.

In the above solution, the insulating member is connected to the electrode terminal of the battery through a thermal composite bonding process, which can reduce the difficulty of connecting the electrode terminal to the insulating member, improve the manufacturing efficiency of the battery, and ensure that the electrode terminal is stably mounted in the first through hole.

According to some embodiments of the present application, along the first direction, the first end is an end of the electrode terminal facing away from the interior of the housing.

In the above solution, the first end is the end of the electrode terminal located on the outer side of the housing, meaning that the end of the electrode terminal facing away from the interior of the housing cannot form a flange, thereby reducing the risk of damage to the portion of the insulating member located outside the housing due to interference from the flange, improving the reliability of the battery.

According to some embodiments of the present application, along the first direction, the first wall has a first surface facing away from the interior of the housing. A portion of the insulating member is disposed on the first surface.

In the above solution, the first surface may be the outer surface of the first wall. By disposing a portion of the insulating member on the first surface, the creepage distance between the electrode terminal and the first wall can be increased, enhancing the insulation effect of the insulating member; and the portion of the insulating member disposed on the first surface can restrict the displacement of the insulating member along the first direction, reducing the risk of displacement of the insulating member and improving the insulation effect. Additionally, the portion of the insulating member being disposed on the first surface may be regarded as the insulating member overlapping the first wall, enabling the electrode terminal to be stably mounted on the first wall.

According to some embodiments of the present application, the battery cell further includes a connecting member, where the connecting member is located on a side of the first wall facing away from the interior of the housing, and the connecting member is connected to the first end to restrict movement of the electrode terminal along the first direction.

In the above solution, as the connecting member is provided, where the connecting member is located on the outer side of the first wall, the flange currently formed on the electrode terminal can be replaced. This avoids interference with the insulating member, reducing the risk of damage to or failure of the insulating member, and effectively constrains the electrode terminal, restricting movement of the electrode terminal along the first direction, reducing the risk of detachment of the electrode terminal, and improving the reliability of the battery.

According to some embodiments of the present application, along the first direction, the portion of the insulating member disposed on the first surface is located between the connecting member and the first wall.

In the above solution, the portion of the insulating member is located between the connecting member and the first wall. The insulating member can be constrained by the connecting member and the first wall, enabling stable mounting on the first wall, reducing the risk of displacement of the insulating member, reducing the risk of a short circuit in the battery cell, and improving the reliability of the battery. When the connecting member has conductive properties, the insulating member provides insulation between the connecting member and the first wall, reducing the risk of a short circuit in the battery cell.

According to some embodiments of the present application, along the first direction, the first end protrudes beyond the first surface, and the connecting member is connected to at least a portion of a peripheral surface of the portion of the first end protruding beyond the first surface; or the connecting member is connected to an end face of the first end.

In the above solution, by disposing the connecting member on the peripheral surface and/or the end face of the first end, a stable connection relationship between the connecting member and the first end can be achieved, effectively constraining the electrode terminal, reducing the risk of displacement of the electrode terminal, and improving the reliability of the battery.

According to some embodiments of the present application, the connecting member is annular, and the connecting member surrounds the first end.

In the above solution, by configuring the connecting member to be annular, the connecting member can be arranged along the circumferential direction of the electrode terminal to connect with the electrode terminal in the circumferential direction of the electrode terminal, thereby effectively constraining the electrode terminal, reducing the risk of displacement of the electrode terminal, and improving the reliability of the battery; and the inner ring of the connecting member can expose the central portion of the electrode terminal, enabling the electrode terminal to connect with external components to achieve external charging and discharging.

According to some embodiments of the present application, along the first direction, the electrode terminal is provided with a liquid injection hole, where the liquid injection hole penetrates the electrode terminal and communicates with the interior of the housing.

In the above solution, integrating the liquid injection hole into the electrode terminal, compared to providing a liquid injection hole on the first wall, can improve the structural strength of the first wall, enhancing the structural strength of the housing, and reducing the risk of electrolyte leakage due to damage to the housing, thus enabling the battery to have higher reliability.

According to some embodiments of the present application, the connecting member seals the liquid injection hole.

In the above solution, as the connecting member is provided and the connecting member seals the liquid injection hole, the connecting member can replace the flange currently formed on the electrode terminal, effectively constraining the electrode terminal without interfering with the insulating member, restricting movement of the electrode terminal along the first direction, reducing the risk of detachment of the electrode terminal, and improving the reliability of the battery; and the connecting member can replace the sealing nail currently used in batteries to seal the liquid injection hole, reducing the risk of electrolyte leakage.

According to some embodiments of the present application, along the first direction, a projection of the connecting member covers the projection of the first end.

In the above solution, by defining that the projection of the connecting member covers the projection of the first end, the connecting member can have a relatively large contact area with the electrode terminal to effectively constrain the electrode terminal, reducing the risk of displacement of the electrode terminal; and the connecting member can effectively seal the liquid injection hole, reducing the risk of electrolyte leakage, and enabling the battery to have relatively high reliability.

According to some embodiments of the present application, an end face of the first end is provided with a first groove, and the liquid injection hole is located at a bottom of the first groove.

In the above solution, by providing the first groove on the end face of the first end to form the liquid injection hole at the bottom of the first groove, the liquid injection hole can be positioned below the end face of the first end, reducing the risk of electrolyte leakage through the liquid injection hole; and by forming a groove on the end face of the first end, the weight of the electrode terminal can be reduced, thereby increasing the gravimetric energy density of the battery.

According to some embodiments of the present application, along the first direction, a surface of the connecting member facing the electrode terminal is provided with a second groove, the first end is disposed in the second groove, and a portion of the connecting member is located in the first groove.

In the above solution, by providing the second groove, the connecting member can be effectively connected to the first end, with a portion of the connecting member located in the first groove, reducing the center of gravity of the connecting member, improving the connection stability between the connecting member and the first end, and reducing the risk of detachment of the electrode terminal. Additionally, by disposing a portion of the connecting member in the first groove, the space of the first groove can be effectively utilized, saving the space occupied by the connecting member along the first direction, and increasing the volumetric energy density of the battery cell.

According to some embodiments of the present application, along the first direction, a surface of the connecting member facing away from the electrode terminal is provided with a third groove, where the second groove and the third groove are correspondingly disposed.

In the above solution, as the third groove is provided on the outer surface of the connecting member, it provides a gripping position for a robotic arm or worker to grasp the connecting member; and the third groove is disposed corresponding to the second groove, enabling the position of the second groove to be determined from the outer side of the connecting member, and allowing precise alignment of the second groove with the first end, thereby improving mounting efficiency.

According to some embodiments of the present application, a peripheral surface of the connecting member is provided with a flange, where the flange is connected to the portion of the insulating member disposed on the first surface.

In the above solution, by providing the flange and connecting the flange to a portion of the insulating member, a seal can be formed between the protrusion and the insulating member, thereby reducing the risk of electrolyte leakage.

According to some embodiments of the present application, the connecting member is welded to the first end.

In the above solution, the connecting member is welded to the first end, enabling a stable connection relationship between the connecting member and the first end, allowing the connecting member to effectively constrain the electrode terminal, reducing the risk of displacement of the electrode terminal, and improving the reliability of the battery.

According to some embodiments of the present application, the connecting member is a metal member.

In the above solution, when the connecting member is a metal member, it has relatively high structural strength, enabling effective constraint of the electrode assembly, and allowing the battery cell to have a relatively long service life.

According to some embodiments of the present application, the electrode terminal has a second end, where along the first direction, the second end is disposed opposite to the first end, and the second end is located on a side of the first wall facing away from the first end. Along the first direction, a projection of the second end partially overlaps with a projection of the first wall.

In the above solution, by configuring the projection of the second end to partially overlap with the projection of the first wall, the second end can act on the side of the first wall facing away from the first end to restrict displacement of the electrode terminal along the first direction, reducing the risk of detachment of the electrode terminal, and improving the reliability of the battery.

According to some embodiments of the present application, a portion of the insulating member is located between the first wall and the second end.

In the above solution, by disposing a portion of the insulating member between the first wall and the second end, the second end and the housing can be effectively insulated, reducing the risk of a short circuit in the battery cell due to contact between the electrode terminal and the housing, thereby improving the reliability of the battery.

According to a second aspect, some embodiments of the present application further provide a battery, where the battery includes the battery cell according to any one of the above embodiments in the first aspect.

According to a third aspect, some embodiments of the present application further provide an electric apparatus, where the electric apparatus includes the battery cell according to any one of the above embodiments in the first aspect, and the battery cell is configured to provide electric energy.

Additional aspects and advantages of the present application will be partially provided in the following description, and some will become apparent from the following description or be understood through the practice of the present application.

### BRIEF DESCRIPTION OF DRAWINGS

To more clearly illustrate the technical solutions of the embodiments of the present application, the drawings required for use in the embodiments will be briefly described below. It should be understood that the following drawings only show certain embodiments of the present application and therefore should not be regarded as limiting the scope. For those of ordinary skill in the art, other related drawings can be obtained based on these drawings without creative effort.
FIG. 1 is a schematic diagram of a vehicle according to some embodiments of the present application;
FIG. 2 is an exploded perspective view of a battery according to some embodiments of the present application;
FIG. 3 is an exploded perspective view of a battery cell according to some embodiments of the present application;
FIG. 4 is a cross-sectional view of a first wall, an electrode terminal, and an insulating member according to some embodiments of the present application;
FIG. 5 is an enlarged view of portion A in FIG. 4;
FIG. 6 is a perspective view of a connecting member, a first wall, an electrode terminal, and an insulating member according to some embodiments of the present application;
FIG. 7 is a perspective view of a connecting member according to some embodiments of the present application;
FIG. 8 is a cross-sectional view of a connecting member, a first wall, an electrode terminal, and an insulating member according to some embodiments of the present application;
FIG. 9 is an enlarged view of portion B in FIG. 8;
FIG. 10 is a schematic diagram of a connecting member and a first end according to some other embodiments of the present application;
FIG. 11 is a perspective view of a connecting member, a first wall, an electrode terminal, and an insulating member according to some other embodiments of the present application;
FIG. 12 is a perspective view of a connecting member according to some other embodiments of the present application;
FIG. 13 is a cross-sectional view of a connecting member, a first wall, an electrode terminal, and an insulating member according to some other embodiments of the present application; and
FIG. 14 is an enlarged view of portion C in FIG. 13.

Description of reference signs: 10. battery cell; 11. housing; 110. housing body; 111. end cover; 112. first wall; 1120. first through hole; 1121. first surface; 1122. second surface; 12. electrode terminal; 120. first end; 121. liquid injection hole; 122. first groove; 1220. first portion; 1221. second portion; 123. second end; 13. insulating member; 14. connecting member; 140. second groove; 141. third groove; 142. flange; 16. electrode assembly; x. first direction; y. second direction; 1000. vehicle; 100. battery; 200. controller; 300. motor; 30. box; 31. upper box body; and 32. lower box body.

### DESCRIPTION OF EMBODIMENTS

To make the objectives, technical solutions, and advantages of the embodiments of the present application clearer, the technical solutions in the embodiments of the present application will be clearly described below in conjunction with the drawings in the embodiments of the present application. It is apparent that the described embodiments are some, but not all, embodiments of the present application. Based on the embodiments in the present application, all other embodiments obtained by those of ordinary skill in the art without creative effort fall within the scope of protection of the present application.

Unless otherwise defined, all technical and scientific terms used in the present application have the same meaning as commonly understood by those skilled in the technical field of the present application; the terms used in the specification of the present application are for the purpose of describing specific embodiments only and are not intended to limit the present application; and the terms "include" and "have" and any variations thereof in the specification, claims, and descriptions of the drawings of the present application are intended to cover non-exclusive inclusion. The terms "first," "second," and the like in the specification, claims, or descriptions of the drawings of the present application are used to distinguish different objects, rather than to describe a specific order or hierarchical relationship.

Reference to an "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

In the description of the present application, it should be noted that, unless otherwise expressly specified and limited, the terms "mount," "connect," "join," and "attach" should be understood in a broad sense, for example, as a fixed connection, a detachable connection, or an integral connection; or a direct connection, an indirect connection through an intermediate medium, or an internal communication between two elements. For those of ordinary skill in the art, the specific meanings of the above terms in the present application can be understood based on specific circumstances.

The term "and/or" in the present application is merely an association relationship describing associated objects, indicating that three relationships may exist. For example, A and/or B may indicate: A alone, both A and B, or B alone. In addition, the character "/" in the present application generally indicates an "or" relationship between the associated objects.

In the embodiments of the present application, the same reference signs denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated apparatus, are merely illustrative and should not impose any limitation on the present application.

In the present application, the battery cell may include a lithium-ion battery cell, a lithium-sulfur battery cell, a sodium-lithium-ion battery cell, a sodium-ion battery cell, or a magnesium-ion battery cell, and the embodiments of the present application are not limited thereto. The battery cell may be cylindrical, flat, cuboidal, or of other shapes, and the embodiments of the present application are not limited thereto.

The battery mentioned in the embodiments of the present application refers to a single physical module including one or more battery cells to provide higher voltage and capacity. The battery generally includes a box for enclosing one or more battery cells. The box can prevent liquids or other foreign objects from affecting the charging or discharging of the battery cells.

The battery cell includes a housing, an electrode assembly, and an electrolyte, where the electrode assembly is disposed inside the housing. The electrode assembly consists of a positive electrode plate, a negative electrode plate, and a separator. The battery cell operates primarily by the movement of metal ions between the positive electrode plate and the negative electrode plate. The positive electrode plate includes a positive electrode current collector and a positive electrode active substance layer, where the positive electrode active substance layer is applied to the surface of the positive electrode current collector, the portion of the positive electrode current collector uncoated with the positive electrode active substance layer protrudes beyond the portion of the positive electrode current collector coated with the positive electrode active substance layer, and the portion of the positive electrode current collector uncoated with the positive electrode active substance layer serves as a positive electrode tab. For a lithium-ion battery, for example, the material of the positive electrode current collector may be aluminum, and the positive electrode active substance may be lithium cobalt oxide, lithium iron phosphate, ternary lithium, lithium manganate, or the like. The negative electrode plate includes a negative electrode current collector and a negative electrode active substance layer, where the negative electrode active substance layer is applied to the surface of the negative electrode current collector, the portion of the negative electrode current collector uncoated with the negative electrode active substance layer protrudes beyond the portion of the negative electrode current collector coated with the negative electrode active substance layer, and the portion of the negative electrode current collector uncoated with the negative electrode active substance layer serves as a negative electrode tab. The material of the negative electrode current collector may be copper, and the negative electrode active substance may be carbon or silicon. The material of the separator may be PP (polypropylene, polypropylene) or PE (polyethylene, polyethylene). The separator has electronic insulation properties and is configured to isolate adjacent positive electrode plate and negative electrode plate, preventing a short circuit between the adjacent positive electrode plate and negative electrode plate. The separator has a large number of through micropores, allowing electrolyte ions to pass freely and providing good permeability to lithium ions.

The battery cell further includes an electrode terminal, where the electrode terminal is configured to connect with the tab to enable external charging and discharging of the battery cell. The housing includes a first wall, where the first wall is provided with a first through hole, and the electrode terminal is mounted in the first through hole. An insulating member is disposed between the first wall and the electrode terminal to insulate the first wall from the electrode terminal, reducing the risk of a short circuit in the battery cell.

For the development of battery technology, multiple design factors need to be considered simultaneously, such as battery life, energy density, discharge capacity, charge-discharge rate, and other performance parameters. Additionally, the reliability of the battery needs to be considered. Currently, one end of the electrode terminal is bent outward to form an outwardly extending flange to constrain the electrode terminal, restricting the movement of the electrode terminal along the thickness direction of the first wall, and thus the electrode terminal is mounted in the first through hole. However, the force generated during the process of bending the end of the electrode terminal outward to form the flange acts on the insulating member between the electrode terminal and the housing, causing damage to the insulating member, affecting the insulation performance of the insulating member, and increasing the risk of a short circuit in the battery cell, thus affecting the reliability of the battery.

In view of this, to address the issue of damage to the insulating member caused by the flange of the electrode terminal, which affects the reliability of the battery, some embodiments of the present application provide a battery cell, where the battery cell includes a housing, an electrode terminal, and an insulating member. The housing has a first wall, and the electrode terminal is disposed in a first through hole on the first wall. The insulating member connects the electrode terminal and the first wall. Along the thickness direction of the first wall, a projection of a first end of the electrode terminal in the thickness direction of the first wall does not overlap with a projection of the insulating member.

In the above solution, the insulating member connects the electrode terminal and the first wall, enabling the electrode terminal to be fixed to the first wall; and the shape of the electrode terminal is defined such that the projection of the first end of the electrode terminal does not overlap with the projection of the insulating member, meaning that the flange currently formed on the first end of the electrode terminal is eliminated, reducing the risk of damage to the insulating member due to interference with the insulating member from the outward bending of the end of the electrode terminal to form a flange. This effectively enhances the insulation performance of the insulating member, reducing the risk of a short circuit in the battery cell, and improving the reliability of the battery.

The technical solutions described in the embodiments of the present application are applicable to batteries and electric apparatuses using batteries.

The electric apparatus may be a vehicle, a mobile phone, a portable device, a laptop computer, a ship, a spacecraft, an electric toy, an electric tool, or the like. Spacecraft include airplanes, rockets, space shuttles, spaceships, or the like; electric toys include fixed or mobile electric toys, such as game consoles, electric car toys, electric ship toys, and electric airplane toys; and electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the present application impose no special restrictions on the above electric apparatuses.

For convenience of explanation, the following embodiments take the electric apparatus being a vehicle as an example.

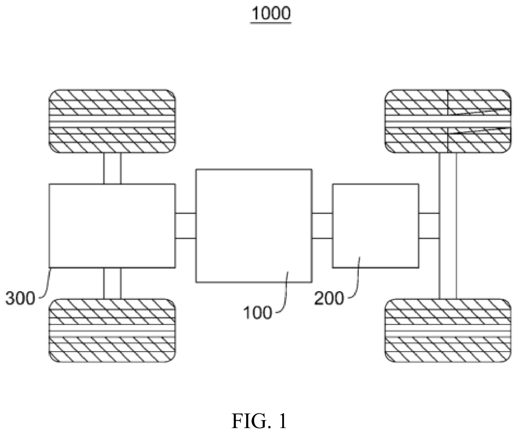

Referring to FIG. 1, FIG. 1 is a schematic diagram of a vehicle 1000 according to some embodiments of the present application. The vehicle 1000 may be a fuel vehicle, a gas vehicle, or a new energy vehicle, where the new energy vehicle may be a battery electric vehicle, a hybrid vehicle, or an extended-range vehicle. A battery 100 is disposed inside the vehicle 1000, and the battery 100 may be disposed at the bottom, front, or rear of the vehicle 1000. The battery 100 may be used to power the vehicle 1000. For example, the battery 100 may serve as an operational power source for the vehicle 1000. The vehicle 1000 may further include a controller 200 and a motor 300, where the controller 200 is configured to control the battery 100 to supply power to the motor 300, for example, for the operational power requirements of the vehicle 1000 during starting, navigation, and driving.

In some embodiments of the present application, the battery 100 may serve not only as an operational power source for the vehicle 1000 but also as a driving power source for the vehicle 1000, replacing or partially replacing fuel or natural gas to provide driving power for the vehicle 1000.

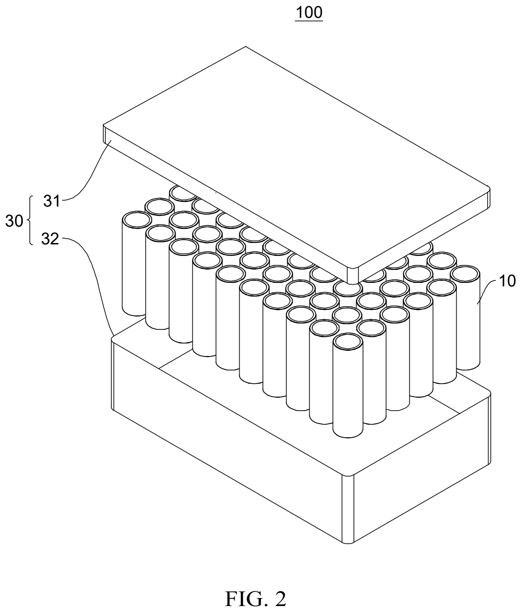

Referring to FIG. 2, FIG. 2 is an exploded perspective view of a battery 100 according to some embodiments of the present application. The battery 100 includes a box 30 and a battery cell 10, where the battery cell 10 is accommodated within the box 30. The box 30 is used to provide an accommodation space for the battery cell 10, and the box 30 may adopt various structures. In some embodiments, the box 30 may include an upper box body 31 and a lower box body 32, where the upper box body 31 and the lower box body 32 cover each other, and the upper box body 31 and the lower box body 32 together define an accommodation space for accommodating the battery cell 10. The lower box body 32 may be a hollow structure with an opening at one end, and the upper box body 31 may be a plate-like structure, where the upper box body 31 covers the open side of the lower box body 32, such that the upper box body 31 and the lower box body 32 together define the accommodation space. Alternatively, both the upper box body 31 and the lower box body 32 may be hollow structures with an opening on one side, where the open side of the upper box body 31 covers the open side of the lower box body 32. Certainly, the box 30 formed by the upper box body 31 and the lower box body 32 may have various shapes, such as a cylinder or a cuboid.

In the battery 100, there may be multiple battery cells 10, and the multiple battery cells 10 may be connected in series, parallel, or a combination thereof, where the combination refers to a mix of series and parallel connections among the multiple battery cells 10. The multiple battery cells 10 may be directly connected in series, parallel, or a combination thereof, and the entirety formed by the multiple battery cells 10 is accommodated in the box 30. Alternatively, the battery 100 may consist of multiple battery cells 10 first connected in series, parallel, or a combination thereof to form a battery module, and multiple battery modules are then connected in series, parallel, or a combination thereof to form an entirety, which is accommodated in the box 30. The battery 100 may further include other structures. For example, the battery 100 may include a busbar component for achieving electrical connections between the multiple battery cells 10.

Each battery cell 10 may be a secondary battery cell or a primary battery cell, or may be a lithium-sulfur battery cell, a sodium-ion battery cell, or a magnesium-ion battery cell, but is not limited thereto. The battery cell 10 may be cylindrical, flat, cuboidal, or of other shapes.

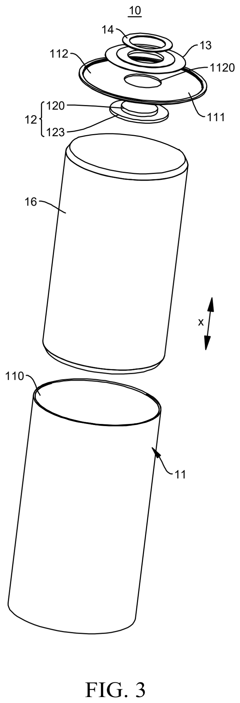

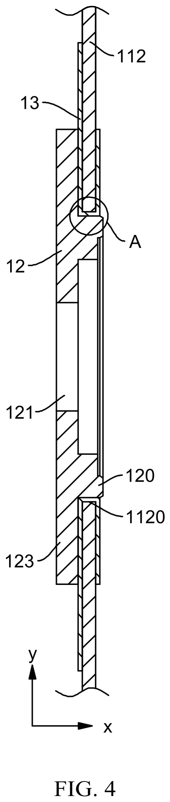

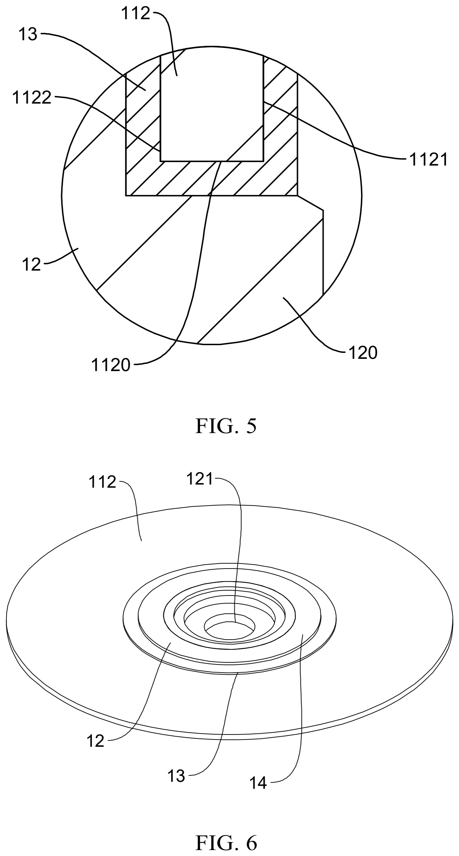

According to some embodiments of the present application, referring to FIGs. 3-5, FIG. 3 is an exploded perspective view of a battery cell 10 according to some embodiments of the present application, FIG. 4 is a cross-sectional view of a first wall 112, an electrode terminal 12, and an insulating member 13 according to some embodiments of the present application, and FIG. 5 is an enlarged view of portion A in FIG. 4.

The battery cell 10 includes a housing 11, an electrode terminal 12, and an insulating member 13. The housing 11 has a first wall 112, where the first wall 112 has a first through hole 1120. The electrode terminal 12 is disposed in the first through hole 1120, and along a first direction x, the electrode terminal 12 has a first end 120, where the first direction x is parallel to a thickness direction of the first wall 112. At least a portion of the insulating member 13 is disposed between the electrode terminal 12 and a wall of the first through hole 1120, and the insulating member 13 connects the electrode terminal 12 and the first wall 112. Along the first direction x, a projection of the first end 120 does not overlap with a projection of the insulating member 13.

The housing 11 is a component that accommodates an electrode assembly 16 of the battery cell 10, meaning that the electrode assembly 16 is disposed inside the housing 11.

The material of the housing 11 may be aluminum, aluminum alloy, steel, or the like. The housing 11 may be cylindrical, flat, cuboidal, or of other shapes. In some embodiments, the housing 11 may include a housing body 110 and an end cover 111. The housing body 110 is a hollow structure and the housing body 110 has an opening. The electrode assembly 16 is disposed inside the housing body 110. The end cover 111 seals the opening of the housing body 110, and the end cover 111 may be connected to the housing body 110 by welding, riveting, or other connection methods. The first wall 112 is one of the walls of the housing 11, and in some embodiments, the first wall 112 may be the end cover 111 described above. The first direction x may be the thickness direction of the first wall 112.

The first through hole 1120 is a hole structure formed in the first wall 112, where the first through hole 1120 can accommodate the electrode terminal 12, such that a portion of the electrode terminal 12 is located inside the housing 11 to connect with a tab of the electrode assembly, and a portion of the electrode terminal 12 is exposed to the outside to connect with external components, enabling external charging and discharging of the battery cell 10.

The electrode terminal 12 is a component disposed on the first wall 112, with a portion located in the first through hole 1120. One end of the electrode terminal 12 is used to connect with the tab of the electrode assembly, and the other end is connected to external components to enable external charging and discharging of the battery cell 10. In some embodiments, the outer contour of the projection of the electrode terminal 12 along the first direction x may be circular, square, or of other shapes. In some embodiments of the present application, the outer contour of the projection of the electrode terminal 12 along the first direction x is exemplified as being circular.

In some embodiments, the first direction x may be parallel to the axial direction of the first through hole 1120. The first end 120 is one end of the electrode terminal 12 along the first direction x. In some embodiments, the first end 120 may be the end of the electrode terminal 12 facing the interior of the housing 11 (that is, the end connected to the tab). In some embodiments, the first end 120 may be the end of the electrode terminal 12 facing away from the interior of the housing 11.

The insulating member 13 is a component disposed between the first wall 112 and the electrode terminal 12, where the insulating member 13 is used to insulate the electrode terminal 12 from the first wall 112. In some embodiments, the material of the insulating member 13 may be plastic, ceramic, or other materials with insulating properties.

In some embodiments, "at least a portion of the insulating member 13 is disposed between the electrode terminal 12 and a wall of the first through hole 1120" may be understood as the insulating member 13 being disposed between the wall of the first through hole 1120 and the electrode terminal 12 to achieve insulation between the electrode terminal 12 and the wall of the first through hole 1120.

In some embodiments, "the insulating member 13 connects the electrode terminal 12 and the first wall 112" may be understood as the electrode terminal 12 being connected to the insulating member 13, and the insulating member 13 being connected to the first wall 112, to achieve mounting of the electrode terminal 12 on the first wall 112 without detaching from the first through hole 1120. In some embodiments, the insulating member 13 and the first wall 112 may be connected by overlapping, snapping, bonding, thermal composite bonding, or other connection methods. In some embodiments, the insulating member 13 and the electrode terminal 12 may be connected by bonding, thermal composite bonding, or other connection methods.

"Along the first direction x, a projection of the first end 120 does not overlap with a projection of the insulating member 13" may be understood as the size of the first end 120 being smaller than the size of the first through hole 1120. This may alternatively be understood as that in a second direction y, the first end 120 does not interfere with the insulating member 13. The second direction y is perpendicular to the thickness direction of the first wall 112, and the second direction y may be parallel to a plane where a surface of the first wall 112 lies.

In the above solution, the insulating member 13 connects the electrode terminal 12 and the first wall 112, enabling the electrode terminal 12 to be fixed to the first wall 112; and the shape of the electrode terminal 12 is defined such that the projection of the first end 120 of the electrode terminal 12 does not overlap with the projection of the insulating member 13, meaning that the flange currently formed on the first end 120 of the electrode terminal 12 is eliminated, reducing the risk of damage to the insulating member 13 due to interference with the insulating member 13 from the outward bending of the end of the electrode terminal 12 to form a flange. This effectively enhances the insulation performance of the insulating member 13, reducing the risk of a short circuit in the battery cell 10, and improving the reliability of the battery.

According to some embodiments of the present application, the insulating member 13 is thermally compositely connected to the electrode terminal 12.

In some embodiments, the insulating member 13 may be connected to the electrode terminal 12 through a thermal composite bonding process. For example, when the insulating member 13 is plastic, by heating the insulating member 13, the insulating member 13 wraps around a portion of the peripheral surface of the electrode terminal 12 and connects to the electrode terminal 12.

In the above solution, the insulating member 13 is connected to the electrode terminal of the battery through a thermal composite bonding process, which can reduce the difficulty of connecting the electrode terminal 12 to the insulating member 13, improve the manufacturing efficiency of the battery, and ensure that the electrode terminal 12 is stably mounted in the first through hole 1120.

According to some embodiments of the present application, along the first direction x, the first end 120 is an end of the electrode terminal 12 facing away from the interior of the housing 11.

In some embodiments, along the first direction x, the end of the electrode terminal 12 facing away from the electrode assembly 16 is the first end 120. In some embodiments, the first end 120 may be configured to connect with external components to enable external charging and discharging of the battery cell 10.

In the above solution, the first end 120 is the end of the electrode terminal 12 located on the outer side of the housing 11, meaning that the end of the electrode terminal 12 facing away from the interior of the housing 11 cannot form a flange, thereby reducing the risk of damage to the portion of the insulating member 13 located outside the housing 11 due to interference from the flange, improving the reliability of the battery.

In some other embodiments, the first wall 112 may alternatively be an end of the electrode terminal 12 facing the electrode assembly.

According to some embodiments of the present application, referring to FIG. 5, along the first direction x, the first wall 112 has a first surface 1121 facing away from the interior of the housing 11. A portion of the insulating member 13 is disposed on the first surface 1121.

In some embodiments, the first surface 1121 may be the outer surface of the first wall 112, that is, the surface of the first wall 112 exposed to the outside. "A portion of the insulating member 13 is disposed on the first surface 1121" may be understood as the insulating member 13 being disposed on the outer surface of the first wall 112. This may alternatively be understood as a portion of the insulating member 13 being located between the wall of the first through hole 1120 and the electrode terminal 12, and a portion of the insulating member 13 being located on the outer surface of the first wall 112.

In some embodiments, the portion of the insulating member 13 disposed on the first surface 1121 may be connected to the first surface 1121 by bonding or thermal composite bonding. In some embodiments, the portion of the insulating member 13 disposed on the first surface 1121 may be directly placed on the first surface 1121.

In the above solution, the first surface 1121 may be the outer surface of the first wall 112. By disposing a portion of the insulating member 13 on the first surface 1121, the creepage distance between the electrode terminal 12 and the first wall 112 can be increased, enhancing the insulation effect of the insulating member 13; and the portion of the insulating member 13 disposed on the first surface 1121 can restrict the displacement of the insulating member 13 along the first direction x, reducing the risk of displacement of the insulating member 13 and improving the insulation effect. Additionally, the portion of the insulating member 13 being disposed on the first surface 1121 may be regarded as the insulating member 13 overlapping the first wall 112, enabling the electrode terminal 12 to be stably mounted on the first wall 112.

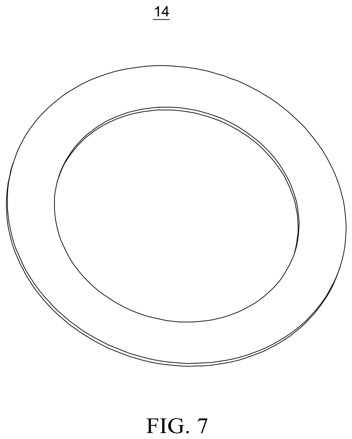

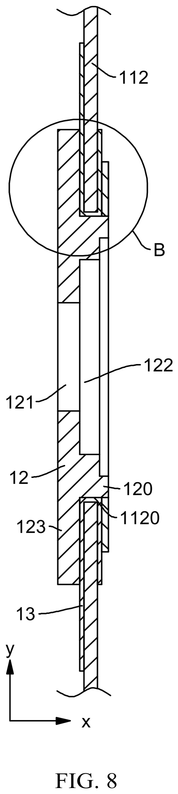

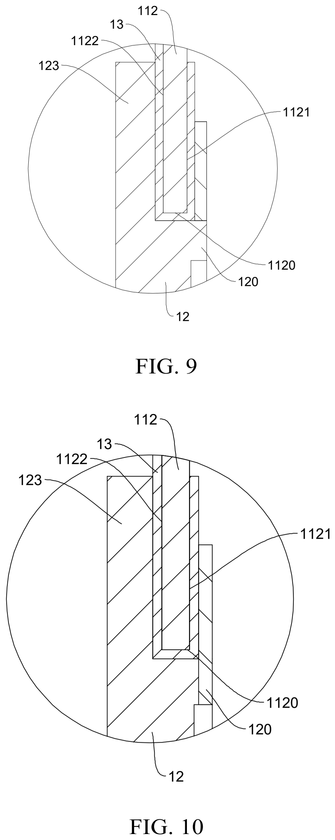

According to some embodiments of the present application, referring to FIGs. 6-9, FIG. 6 is a perspective view of a connecting member 14, a first wall 112, an electrode terminal 12, and an insulating member 13 according to some embodiments of the present application. FIG. 7 is a perspective view of a connecting member 14 according to some embodiments of the present application. FIG. 8 is a cross-sectional view of a connecting member 14, a first wall 112, an electrode terminal 12, and an insulating member 13 according to some embodiments of the present application, and FIG. 9 is an enlarged view of portion B in FIG. 8.

The battery cell 10 further includes a connecting member 14, where the connecting member 14 is located on a side of the first wall 112 facing away from the interior of the housing 11, and the connecting member 14 is connected to the first end 120 to restrict movement of the electrode terminal 12 along the first direction x.

In some embodiments, the connecting member 14 is located on the outer side of the housing 11, and the connecting member 14 is connected to the first end 120 to constrain the electrode terminal 12 along the first direction x, restricting displacement of the electrode terminal 12.

In some embodiments, the connecting member 14 may be connected to the first end 120 by bonding, welding, threaded connection, thermal composite bonding, or other connection methods. The material of the connecting member 14 may be the same as or different from the material of the electrode terminal 12. In some embodiments, the material of the connecting member 14 may be a metal material or a non-metal material.

In some embodiments, the connecting member 14 can limit the displacement of the electrode terminal 12 along the first direction x from the outer side of the housing 11 toward the inner side of the housing 11.

In the above solution, as the connecting member 14 is provided, where the connecting member 14 is located on the outer side of the first wall 112, the flange currently formed on the electrode terminal 12 can be replaced. This avoids interference with the insulating member 13, reducing the risk of damage to or failure of the insulating member 13, and effectively constrains the electrode terminal 12, restricting movement of the electrode terminal 12 along the first direction x, reducing the risk of detachment of the electrode terminal 12, and improving the reliability of the battery.

According to some embodiments of the present application, referring to FIG. 9, along the first direction x, the portion of the insulating member 13 disposed on the first surface 1121 is located between the connecting member 14 and the first wall 112.

In some embodiments, the connecting member 14 is connected to the first end 120, providing pressure to the portion of the insulating member 13 disposed on the first surface 1121, and causing the portion of the insulating member 13 disposed on the first surface 1121 to closely contact the first surface 1121.

In some embodiments, the connecting member 14 may be made of a conductive material, and a portion of the insulating member 13 is located between the connecting member 14 and the first wall 112 to insulate the connecting member 14 from the first wall 112.

In some embodiments, referring to FIG. 9, along a second direction y (where the second direction y may be perpendicular to the first direction x, and the second direction y may be parallel to the first surface 1121), the portion of the insulating member 13 disposed on the first surface 1121 protrudes beyond the connecting member 14. In some other embodiments, along the second direction y, the portion of the insulating member 13 disposed on the first surface 1121 does not protrude beyond the connecting member 14.

In the above solution, the portion of the insulating member 13 is located between the connecting member 14 and the first wall 112. The insulating member 13 can be constrained by the connecting member 14 and the first wall 112, enabling stable mounting on the first wall 112, reducing the risk of displacement of the insulating member 13, reducing the risk of a short circuit in the battery cell 10, and improving the reliability of the battery. When the connecting member 14 has conductive properties, the insulating member 13 provides insulation between the connecting member 14 and the first wall 112, reducing the risk of a short circuit in the battery cell 10.

In some other embodiments, the portion of the insulating member 13 disposed on the first surface 1121 is provided with a notch, and the connecting member 14 may be located in the notch, such that a portion of the connecting member 14 facing the first surface 1121 can be connected to the first surface 1121.

According to some embodiments of the present application, along the first direction x, the first end 120 protrudes beyond the first surface 1121, and the connecting member 14 is connected to at least a portion of a peripheral surface of the portion of the electrode terminal 12 protruding beyond the first surface 1121; or the connecting member 14 is connected to an end face of the first end 120.

Referring to FIG. 9, the peripheral surface of the electrode terminal 12 may be understood as the electrode terminal 12 having two end faces along the thickness direction of the first wall 112, with the two end faces connected by the peripheral surface. Referring to FIG. 9, along the first direction x, and from the interior of the housing 11 toward the exterior of the housing 11, the first end 120 protrudes beyond the first surface 1121, and at least a portion of the peripheral surface of the portion of the first end 120 protruding beyond the first surface 1121 may be connected to the connecting member 14. "At least a portion of the peripheral surface of the portion of the first end 120 protruding beyond the first surface 1121 may be connected to the connecting member 14" may be understood as the peripheral surface of the portion of the first end 120 protruding beyond the first surface 1121 being connected to the connecting member 14, or in some embodiments, the peripheral surface of the portion of the first end 120 protruding beyond the portion of the insulating member 13 disposed on the first surface 1121 being connected to the connecting member 14.

Referring to FIG. 10, FIG. 10 is a schematic diagram of a connecting member 14 and a first end 120 according to some other embodiments of the present application. The connecting member 14 is connected to an end face of the first end 120. The end face of the first end 120 may refer to the end face of the electrode terminal 12 facing away from the interior of the housing 11. Referring to FIG. 10, along the first direction x, and from the interior of the housing 11 toward the exterior of the housing 11, the first end 120 does not protrude beyond the first surface 1121, and the end face of the first end 120 is flush with the first surface 1121.

In the above solution, by disposing the connecting member 14 on the peripheral surface and/or the end face of the first end 120, a stable connection relationship between the connecting member 14 and the first end 120 can be achieved, effectively constraining the electrode terminal 12, reducing the risk of displacement of the electrode terminal 12, and improving the reliability of the battery.

According to some embodiments of the present application, referring to FIG. 6, the connecting member 14 is annular, and the connecting member 14 surrounds the first end 120.

"The connecting member 14 is annular" may refer to the connecting member 14 being a hollow through structure. In some embodiments, the outer contour of the projection of the first end 120 along the first direction x may be circular, and the connecting member 14 may be circular annular. In some embodiments, the outer contour of the projection of the first end 120 along the first direction x may be square, and the connecting member 14 may be square annular.

"The connecting member 14 surrounds the first end 120" may be understood as any portion of the first end 120 being connected to the connecting member 14 along the circumferential direction of the first end 120.

In the above solution, by configuring the connecting member 14 to be annular, the connecting member 14 can be arranged along the circumferential direction of the electrode terminal 12 to connect with the electrode terminal 12 in the circumferential direction of the electrode terminal 12, thereby effectively constraining the electrode terminal 12, reducing the risk of displacement of the electrode terminal 12, and improving the reliability of the battery; and the inner ring of the connecting member 14 can expose the central portion of the electrode terminal 12, enabling the electrode terminal 12 to connect with external components to achieve external charging and discharging.

According to some embodiments of the present application, along the first direction x, the electrode terminal 12 is provided with a liquid injection hole 121, where the liquid injection hole 121 penetrates the electrode terminal 12 and communicates with the interior of the housing 11.

The liquid injection hole 121 is a through-hole structure formed in the electrode terminal 12, which can enable communication between the interior and exterior of the housing 11, enabling electrolyte injection into the interior of the housing 11 through the liquid injection hole 121. In some embodiments, the liquid injection hole 121 may be sealed with a sealing nail. The sealing nail may be a non-metal nail, such as a rubber nail. The sealing nail may be a metal nail, such as an aluminum nail.

In the above solution, integrating the liquid injection hole 121 into the electrode terminal 12, compared to providing a liquid injection hole 121 on the first wall 112, can improve the structural strength of the first wall 112, enhancing the structural strength of the housing 11, and reducing the risk of electrolyte leakage due to damage to the housing 11, thus enabling the battery to have higher reliability.

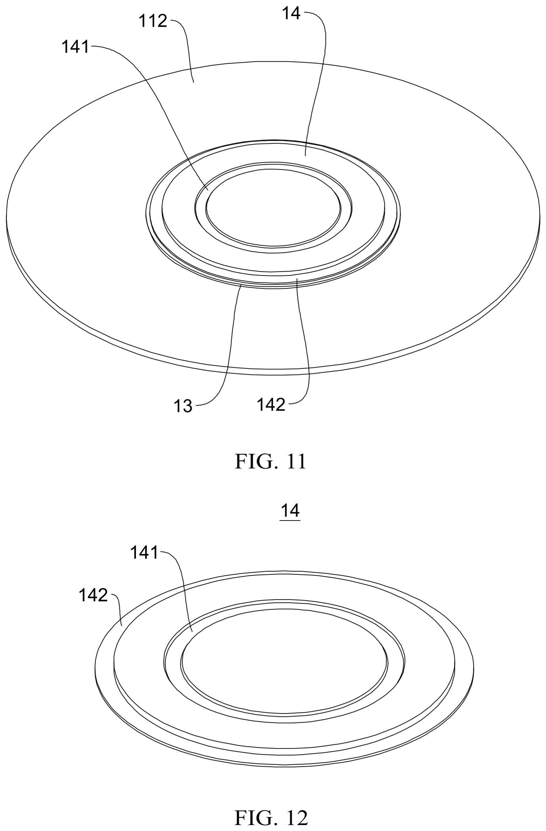

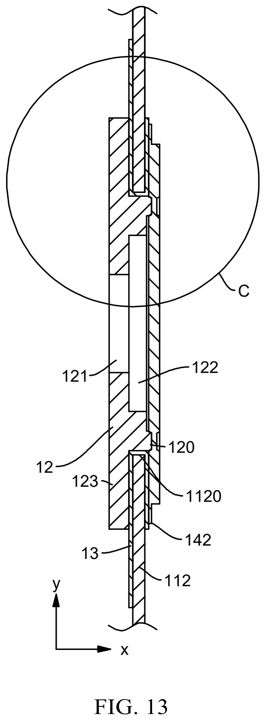

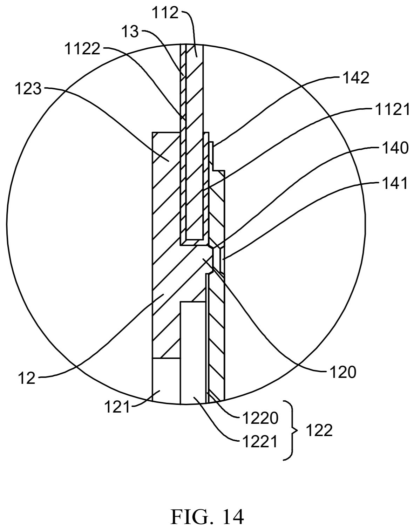

According to some other embodiments of the present application, referring to FIGs. 11-14, FIG. 11 is a perspective view of a connecting member 14, a first wall 112, an electrode terminal 12, and an insulating member 13 according to some other embodiments of the present application. FIG. 12 is a perspective view of a connecting member 14 according to some other embodiments of the present application. FIG. 13 is a cross-sectional view of a connecting member 14, a first wall 112, an electrode terminal 12, and an insulating member 13 according to some other embodiments of the present application, and FIG. 14 is an enlarged view of portion C in FIG. 13.

The connecting member 14 seals the liquid injection hole 121.

In some embodiments, the liquid injection hole 121 may be sealed with a sealing nail, and after the sealing nail is applied, the connecting member 14 is connected to the first end 120 and further seals the liquid injection hole 121. In some embodiments, after electrolyte injection into the interior of the housing 11, the connecting member 14 is connected to the first end 120 to seal the liquid injection hole 121.

In the above solution, as the connecting member 14 is provided and the connecting member 14 seals the liquid injection hole 121, the connecting member 14 can replace the flange currently formed on the electrode terminal 12, effectively constraining the electrode terminal 12 without interfering with the insulating member 13, restricting movement of the electrode terminal 12 along the first direction x, reducing the risk of detachment of the electrode terminal 12, and improving the reliability of the battery; and the connecting member 14 can replace the sealing nail currently used in batteries or provide additional protection to the liquid injection hole 121, reducing the risk of electrolyte leakage.

According to some embodiments of the present application, along the first direction x, a projection of the connecting member 14 covers the projection of the first end 120.

"Along the first direction x, a projection of the connecting member 14 covers the projection of the first end 120" may be understood as the connecting member 14 covering the first end 120 to restrict displacement of the electrode terminal 12 in the first direction and to seal the liquid injection hole 121. This may alternatively be understood as the connecting member 14 being disk-shaped or plate-shaped to cover any portion of the first end 120.

In the above solution, by defining that the projection of the connecting member 14 covers the projection of the first end 120, the connecting member 14 can have a relatively large contact area with the electrode terminal 12 to effectively constrain the electrode terminal 12, reducing the risk of displacement of the electrode terminal 12; and the connecting member 14 can effectively seal the liquid injection hole 121, reducing the risk of electrolyte leakage, and enabling the battery to have relatively high reliability.

According to some embodiments of the present application, referring to FIG. 14, an end face of the first end 120 is provided with a first groove 122, and the liquid injection hole 121 is located at a bottom of the first groove 122.

In some embodiments, the end face of the first end 120 is recessed toward the interior of the housing 11 to form the first groove 122. The bottom of the first groove 122 may be the portion of the first groove 122 close to the interior of the housing 11 along the first direction x.

In the above solution, by providing the first groove 122 on the end face of the first end 120 to form the liquid injection hole 121 at the bottom of the first groove 122, the liquid injection hole 121 can be positioned below the end face of the first end 120, reducing the risk of electrolyte leakage through the liquid injection hole 121; and by forming a groove on the end face of the first end 120, the weight of the electrode terminal 12 can be reduced, thereby increasing the gravimetric energy density of the battery.

According to some embodiments of the present application, along the first direction x, a surface of the connecting member 14 facing the electrode terminal 12 is provided with a second groove 140, the first end 120 is disposed in the second groove 140, and a portion of the connecting member 14 is located in the first groove 122.

In some embodiments, the second groove 140 may be annular to correspond to the annular first end 120. "The first end 120 is disposed in the second groove 140" may refer to a portion of the first end 120 being located in the second groove 140 when the connecting member 14 is connected to the first end 120. "A portion of the connecting member 14 is located in the first groove 122" may be understood as a portion of the connecting member 14 protruding toward the first groove 122 beyond the bottom of the second groove 140 to be located in the first groove 122. In some embodiments, the portion of the connecting member 14 protruding toward the first groove 122 is in contact with a sidewall of the first groove 122.

In some embodiments, along the first direction x, the first end 120 protrudes beyond the first surface 1121, and the portion of the first end 120 protruding beyond the first surface 1121 is disposed in the second groove 140.

Referring to FIG. 14, in some embodiments, the first groove 122 is a stepped groove, having a larger-sized first portion 1220 and a smaller-sized second portion 1221, where the first portion 1220 is farther from the interior of the housing 11 than the second portion 1221, and the bottom of the first groove 122 is located in the second portion 1221. The portion of the connecting member 14 protruding toward the first groove 122 is located in the first portion 1220.

In the above solution, by providing the second groove 140, the connecting member 14 can be effectively connected to the first end 120, with a portion of the connecting member 14 located in the first groove 122, reducing the center of gravity of the connecting member 14, improving the connection stability between the connecting member 14 and the first end 120, and reducing the risk of detachment of the electrode terminal 12. Additionally, by disposing a portion of the connecting member 14 in the first groove 122, the space of the first groove 122 can be effectively utilized, saving the space occupied by the connecting member 14 along the first direction x, and increasing the volumetric energy density of the battery cell 10.

According to some embodiments of the present application, along the first direction x, a surface of the connecting member 14 facing away from the electrode terminal 12 is provided with a third groove 141, where the second groove 140 and the third groove 141 are correspondingly disposed.

The surface of the connecting member 14 facing away from the electrode terminal 12 may be the outer surface of the connecting member 14, meaning that the third groove 141 is formed on the outer surface of the connecting member 14, and the second groove 140 is formed on the inner surface of the connecting member 14.

The third groove 141 is a groove structure formed on the outer surface of the connecting member 14, corresponding to the second groove 140. "The second groove 140 and the third groove 141 are correspondingly disposed" may be understood as the second groove 140 and the third groove 141 being located at the same position in a plane perpendicular to the first direction, or the projections of the second groove 140 and the third groove 141 along the first direction x being located at the same position.

In the above solution, as the third groove 141 is provided on the outer surface of the connecting member 14, it provides a gripping position for a robotic arm or worker to grasp the connecting member 14; and the third groove 141 is disposed corresponding to the second groove 140, enabling the position of the second groove 140 to be determined from the outer side of the connecting member 14, and allowing precise alignment of the second groove 140 with the first end 120, thereby improving mounting efficiency.

According to some embodiments of the present application, referring to FIG. 14, a peripheral surface of the connecting member 14 is provided with a flange 142, where the flange 142 is connected to the portion of the insulating member 13 disposed on the first surface 1121.

In some embodiments, the flange 142 is a component protruding from the peripheral surface of the connecting member 14. Along the second direction y, the flange 142 protrudes from the peripheral surface of the connecting member 14. In some embodiments, along the first direction x, the size of the flange 142 is smaller than the size of the connecting member 14.

"The flange 142 is connected to the portion of the insulating member 13 disposed on the first surface 1121" may be understood as, along the second direction y, the portion of the insulating member 13 disposed on the first surface 1121 protruding beyond the flange 142, or the portion of the insulating member 13 disposed on the first surface 1121 being flush with the flange 142. The flange 142 may be connected to the insulating member 13 by bonding, thermal composite bonding, or other connection methods. In some embodiments, the flange 142 may be directly placed on the insulating member 13.

In the above solution, by providing the flange 142 and connecting the flange 142 to a portion of the insulating member 13, a seal can be formed between the protrusion and the insulating member 13, thereby reducing the risk of electrolyte leakage.

According to some embodiments of the present application, the connecting member 14 is welded to the first end 120.

In some embodiments, the connecting member 14 may be laser-welded to the peripheral surface of the first end 120. In some embodiments, the connecting member 14 may be laser-welded to the end face of the first end 120.

In some embodiments, the material of the connecting member 14 may be the same as the material of the first end 120. In some embodiments, the material of the connecting member 14 may be different from the material of the first end 120.

In the above solution, the connecting member 14 is welded to the first end 120, enabling a stable connection relationship between the connecting member 14 and the first end 120, allowing the connecting member 14 to effectively constrain the electrode terminal 12, reducing the risk of displacement of the electrode terminal 12, and improving the reliability of the battery.

According to some embodiments of the present application, the connecting member 14 is a metal member.

In some embodiments, the connecting member 14 may be a metal member, such as aluminum or an aluminum alloy. In some embodiments, it is the same as the material of the electrode terminal 12 to enable effective connection with the electrode terminal 12. In some embodiments, when the connecting member 14 is a metal member and the connecting member 14 covers the first end 120, external components can be electrically connected to the connecting member 14 to achieve electrical connection with the electrode terminal 12.

In some embodiments, the connecting member 14 may be made of an insulating material, and when the connecting member 14 is made of an insulating material, it can replace the portion of the insulating member 13 disposed on the first surface 1121, enabling insulation between the first surface 1121 and the electrode terminal 12.

In the above solution, when the connecting member 14 is a metal member, it has relatively high structural strength, enabling effective constraint of the electrode assembly, and allowing the battery cell 10 to have a relatively long service life. When the connecting member 14 is made of an insulating material, it can increase the creepage distance between the electrode terminal 12 and the housing 11, reducing the risk of a short circuit in the battery cell 10, and improving the reliability of the battery.

According to some embodiments of the present application, referring to FIG. 4, the electrode terminal 12 has a second end 123, where along the first direction x, the second end 123 is disposed opposite to the first end 120, and the second end 123 is located on a side of the first wall 112 facing away from the first end 120. Along the first direction x, a projection of the second end 123 partially overlaps with a projection of the first wall 112.

Along the first direction x, the second end 123 is disposed opposite to the first end 120. When the first end 120 faces away from the electrode assembly, the second end 123 may face the electrode terminal 12. "The second end 123 is located on a side of the first wall 112 facing away from the first end 120" may refer to the second end 123 being located inside the housing 11 when the first end 120 faces away from the electrode assembly.

"Along the first direction x, a projection of the second end 123 partially overlaps with a projection of the first wall 112" may be understood as the size of the second end 123 being larger than the size of the first through hole 1120, enabling it to act on the first wall 112 to constrain the electrode terminal 12. For example, when the second end 123 is located inside the housing 11, it can restrict the electrode terminal 12 from moving from the interior of the housing 11 toward the exterior.

In the above solution, by configuring the projection of the second end 123 to partially overlap with the projection of the first wall 112, the second end 123 can act on the side of the first wall 112 facing away from the first end 120 to restrict displacement of the electrode terminal 12 along the first direction x, reducing the risk of detachment of the electrode terminal 12, and improving the reliability of the battery.

In some other embodiments, along the first direction x, the projection of the second end 123 may not overlap with the projection of the first wall 112, meaning that the size of the second end 123 is smaller than the size of the first through hole 1120. By providing a connecting component at the second end 123, the electrode terminal 12 can be constrained, restricting displacement of the electrode terminal 12.

According to some embodiments of the present application, referring to FIG. 4, a portion of the insulating member 13 is located between the first wall 112 and the second end 123.

"A portion of the insulating member 13 is located between the first wall 112 and the second end 123" may be understood as the first wall 112 and the second end 123 being insulated by the insulating member 13. Referring to FIG. 4, along the second direction y, the insulating member 13 protrudes beyond the second end 123.

In some embodiments, the first wall 112 has a second surface 1122, where along the first direction, the second surface 1122 is disposed opposite to the first surface 1121. When the first surface 1121 is the outer surface of the first wall 112, the second surface 1122 may be the inner surface of the first wall 112. A portion of the insulating member 13 may be disposed between the second surface 1122 and the second end 123.

In the above solution, by disposing a portion of the insulating member 13 between the first wall 112 and the second end 123, the second end 123 and the housing 11 can be effectively insulated, reducing the risk of a short circuit in the battery cell 10 due to contact between the electrode terminal 12 and the housing 11, thereby improving the reliability of the battery.

According to some embodiments of the present application, a battery is further provided, where the battery includes the battery cell 10 described above.

According to some embodiments of the present application, an electric apparatus is further provided, where the electric apparatus includes the battery cell 10 described above, and the battery cell 10 is configured to provide electric energy.

According to some embodiments of the present application, the present application provides a battery cell 10, referring to FIGs. 3-9.

The battery cell 10 includes a housing 11, an electrode terminal 12, an insulating member 13, and a connecting member 14.

The housing 11 has a first wall 112, where the first wall 112 has a first through hole 1120. The electrode terminal 12 is disposed in the first through hole 1120, and along a first direction x, the electrode terminal 12 has a first end 120 and a second end 123 disposed opposite to each other, where the first direction x is parallel to a thickness direction of the first wall 112. A portion of the first end 120 is located in the first through hole 1120, and a portion of the first end 120 protrudes beyond an outer surface of the first wall 112. The second end 123 is located inside the housing 11, and the size of the second end 123 is larger than the size of the first through hole 1120 to restrict the electrode terminal 12 from detaching from the interior of the housing 11 toward the exterior.

A portion of the insulating member 13 is disposed between the electrode terminal 12 and a wall of the first through hole 1120, a portion of the insulating member 13 is disposed on the outer surface of the first wall 112, and another portion of the insulating member 13 is disposed on an inner surface of the first wall 112 and located between the first wall 112 and the second end 123. The insulating member 13 is thermally compositely connected to the electrode terminal 12.

The connecting member 14 is annular and disposed around an axial direction of the first end 120. An inner ring wall surface of the connecting member 14 is welded to a peripheral surface of the first end 120 protruding beyond the insulating member 13 disposed on the outer surface of the first wall 112. The insulating member 13 disposed on the outer surface of the first wall 112 is located between the connecting member 14 and the first wall 112. The connecting member 14 can restrict displacement of the electrode terminal 12 along the first direction x. When the electrode terminal 12 is assembled, the first end 120 of the electrode terminal 12 can be moved from a side of the first wall 112 close to the interior of the housing 11 toward the exterior to pass through the first through hole 1120 and then connect with the connecting member 14. Since the first end 120 does not form a flange, it does not interfere with the insulating member 13, reducing the risk of damage to the insulating member 13.

According to some other embodiments of the present application, the present application provides a battery cell 10, referring to FIGs. 11-14.

The battery cell 10 includes a housing 11, an electrode terminal 12, an insulating member 13, and a connecting member 14.

The housing 11 has a first wall 112, where the first wall 112 has a first through hole 1120. The electrode terminal 12 is disposed in the first through hole 1120, and along a first direction x, the electrode terminal 12 has a first end 120 and a second end 123 disposed opposite to each other, where the first direction x is parallel to a thickness direction of the first wall 112. A portion of the first end 120 is located in the first through hole 1120, and a portion of the first end 120 protrudes beyond an outer surface of the first wall 112. An end face of the first end 120 is provided with a first groove 122, and a liquid injection hole 121 is disposed at a bottom of the first groove 122. The liquid injection hole 121 is sealed with a sealing nail. The second end 123 is located inside the housing 11, and the size of the second end 123 is larger than the size of the first through hole 1120 to restrict the electrode terminal 12 from detaching from the interior of the housing 11 toward the exterior.

A portion of the insulating member 13 is disposed between the electrode terminal 12 and a wall of the first through hole 1120, a portion of the insulating member 13 is disposed on the outer surface of the first wall 112, and another portion of the insulating member 13 is disposed on an inner surface of the first wall 112 and located between the first wall 112 and the second end 123. The insulating member 13 is thermally compositely connected to the electrode terminal 12.

The connecting member 14 is disk-shaped, and a surface of the connecting member 14 facing the electrode terminal 12 is provided with a second groove 140, where the first end 120 is disposed in the second groove 140, and a sidewall of the second groove 140 can be welded to the first end 120. A surface of the connecting member 14 facing away from the electrode terminal 12 is provided with a third groove 141, where the third groove 141 is disposed corresponding to the second groove 140, serving a positioning function. The insulating member 13 disposed on the outer surface of the first wall 112 is located between the connecting member 14 and the first wall 112. In some embodiments, a peripheral surface of the connecting member 14 is provided with a flange 142, where the flange 142 is thermally compositely connected to a portion of the insulating member 13 disposed on the outer surface of the first wall 112 to form a seal, reducing the risk of electrolyte leakage. The connecting member 14 can restrict displacement of the electrode terminal 12 along the first direction x. When the electrode terminal 12 is assembled, the first end 120 of the electrode terminal 12 can be moved from a side of the first wall 112 close to the interior of the housing 11 toward the exterior to pass through the first through hole 1120 and then connect with the connecting member 14. Since the first end 120 does not form a flange, it does not interfere with the insulating member 13, reducing the risk of damage to the insulating member 13.

The above are only preferred embodiments of the present application and are not intended to limit the present application. For those skilled in the art, the present application may have various modifications and changes. Any modifications, equivalent substitutions, improvements, and the like made within the spirit and principles of the present application should be included within the scope of protection of the present application.

## Claims

1. A battery cell, comprising:
a housing, having a first wall, the first wall having a first through hole;
an electrode terminal, disposed in the first through hole, wherein along a first direction, the electrode terminal has a first end, the first direction being parallel to a thickness direction of the first wall; and
an insulating member, at least partially disposed between the electrode terminal and a wall of the first through hole, wherein the insulating member connects the electrode terminal and the first wall; wherein
along the first direction, a projection of the first end does not overlap with a projection of the insulating member.

2. The battery cell according to claim 1, wherein
the insulating member is thermally compositely connected to the electrode terminal.

3. The battery cell according to claim 1 or 2, wherein
along the first direction, the first end is an end of the electrode terminal facing away from an interior of the housing.

4. The battery cell according to claim 3, wherein
along the first direction, the first wall has a first surface facing away from the interior of the housing; and
a portion of the insulating member is disposed on the first surface.

5. The battery cell according to claim 4, wherein the battery cell further comprises:
a connecting member, wherein the connecting member is located on a side of the first wall facing away from the interior of the housing, and the connecting member is connected to the first end to restrict movement of the electrode terminal along the first direction.

6. The battery cell according to claim 5, wherein
along the first direction, the portion of the insulating member disposed on the first surface is located between the connecting member and the first wall.

7. The battery cell according to claim 5, wherein
along the first direction, the first end protrudes beyond the first surface, and the connecting member is connected to at least a portion of a peripheral surface of the portion of the first end protruding beyond the first surface; or the connecting member is connected to an end face of the first end.

8. The battery cell according to any one of claims 5 to 7, wherein
the connecting member is annular, and the connecting member surrounds the first end.

9. The battery cell according to any one of claims 5 to 8, wherein
along the first direction, the electrode terminal is provided with a liquid injection hole, and the liquid injection hole penetrates the electrode terminal and communicates with an interior of the housing.

10. The battery cell according to claim 9, wherein
the connecting member seals the liquid injection hole.

11. The battery cell according to claim 10, wherein
along the first direction, a projection of the connecting member covers a projection of the first end.

12. The battery cell according to claim 10 or 11, wherein
an end face of the first end is provided with a first groove, and the liquid injection hole is located at a bottom of the first groove.

13. The battery cell according to claim 12, wherein
along the first direction, a surface of the connecting member facing the electrode terminal is provided with a second groove, the first end is disposed in the second groove, and a portion of the connecting member is located in the first groove.

14. The battery cell according to claim 13, wherein
along the first direction, the surface of the connecting member facing away from the electrode terminal is provided with a third groove, and the second groove and the third groove are correspondingly disposed.

15. The battery cell according to any one of claims 9 to 14, wherein
a peripheral surface of the connecting member is provided with a flange, and the flange is connected to the portion of the insulating member disposed on the first surface.

16. The battery cell according to any one of claims 5 to 15, wherein
the connecting member is welded to the first end.

17. The battery cell according to any one of claims 5 to 16, wherein
the connecting member is a metal member.

18. The battery cell according to any one of claims 1 to 17, wherein
the electrode terminal has a second end, wherein along the first direction, the second end is disposed opposite to the first end, and the second end is located on a side of the first wall facing away from the first end; and
along the first direction, a projection of the second end partially overlaps with a projection of the first wall.

19. The battery cell according to claim 18, wherein
a portion of the insulating member is located between the first wall and the second end.

20. A battery, comprising the battery cell according to any one of claims 1 to 19.

21. An electric apparatus, comprising the battery cell according to any one of claims 1 to 19, wherein the battery cell is configured to provide electric energy.
